# EUROPEAN PATENT SPECIFICATION

(11) **EP 3 719 542 B1**
(45) Date of publication and mention of the grant of the patent: **28.12.2022**
(21) Application number: 19167331.8
(22) Date of filing: 04.04.2019
(51) Int. Cl.: G01T 1/29, G01T 1/24

(54) **DEVICE FOR NON-FULLY INTERCEPTING SENSOR MONITORS FOR IONIZING BEAMS**
VORRICHTUNG ZUM NICHT-VOLLSTÄNDIGEN ABFANGEN VON SENSORMONITOREN FÜR IONISIERENDE STRAHLEN
DISPOSITIF POUR MONITEURS DE CAPTEURS NON-ENTIÈREMENT INTERCEPTEURS POUR FAISCEAUX IONISANTS

(43) Date of publication of application: 07.10.2020
(73) Proprietor: PAUL SCHERRER INSTITUT, 5232 Villigen PSI (CH)
(72) Inventor: CAMARDA, Massimo, 5200 Brugg (CH); PRADERVAND, Claude, 5304 Endingen (CH)
(74) Representative: Fischer, Michael

(56) References cited:
- EP-A1- 2 006 349
- JP-A- 2004 093 233
- JP-B2- 4 822 261
- US-A- 5 404 014
- US-A- 5 717 214

## Description

The present invention relates to a semiconductor device for intercepting and monitoring ionizing beams.

A semiconductor detector in ionizing radiation detection physics is a device that uses a semiconductor (such as silicon or diamond) to measure the number of charge carriers set free in the detector material by the ionizing radiation. These free carriers are collected due to the influence of an electric field, either external or built-in through the use of doped layers. This results in a measurable charge pulse or in a constant current that can be measured in an outer circuit. As the amount of energy required to create an electron-hole pair is known, and independent of the energy of the incident radiation, measuring the number of electron-hole pairs allows direct determination of the intensity of the incident radiation, furthermore, segmented detectors will allow to characterize not only the total beam intensity but also its center of mass, energy distribution etc..

Gas monitors (GM) and blade monitors (BM) work under similar principles, except that in the first type of monitors electrons and ions are generated, whereas in the second electrons are emitted out from the detector (photoelectric effect), and the current signal is generated by the electron holes pairs left inside the sensor. When compared to gas monitors and blade monitors, semiconductor monitors (SM) have the following advantages:

### SM as compared to GM

The energy required to produce electron-hole pairs in SM is generally lower when compared to the energy required to produce ions in GM. Consequently, the statistical variation of their pulse height is smaller and the energy resolution is higher. Furthermore, SM can have very small footprints, thanks to the Very-Large-Scale-Integration (VLSI) technology, allowing their usage when only limited space is available. The reduced footprint translates also into lower required external biases to drift charges within the sensor and in faster response.

### SM as compared to BM

SM are able to collect electron-hole pairs from the full detectors volume, whereas BM collect charge only from photons absorbed near the surface, this decreases their yield, thus the current signal for a given beam energy/intensity makes them sensitive to low energy background radiation from the bending magnets.

The main drawbacks of using semiconductor-based detectors for continuous beam monitoring applications are (i) their interference with the beam and (ii) degradation due to heat loads and radiation. To minimize these drawbacks, transparency, high-temperature stability and radiation hardness are primary requirements for this category of monitors. Linearity and fast dynamics are also important to obtain stable feedback schemas. This has driven research in wide-band-gap semiconductors for radiation monitor applications. Diamond was, until recently, the only available material among wide-band-gap semiconductors, due to its excellent transparency, radiation hardness and high thermal conductivity.

A recent research paper from our group has proposed thin silicon carbide membranes as alternative material for radiation hard X-ray beam position monitors (XBPMs). These new XBPM were possible thanks to a newly developed doping selective anisotropic deep trench wet etching of Silicon Carbide which permits to perform deep etching with high aspect ratios (e.g. >300µm in depth and <1mm in widths) and which allowed to selectively remove the thick, 380 microns, SiC substrate while preserving the thin, down to 1 micron, low doped epitaxial layers.

Thermal and electrical behavior of XBPMs made from thin silicon carbide membranes and single-crystal diamond was compared using finite-element simulations. Very thin, 1 microns, fabricated silicon carbide devices were also compared with a 12 microns commercial polycrystalline diamond XBPM at the Swiss Light Source at the Paul Scherrer Institute. Results show that silicon carbide devices can reach equivalent transparencies while showing improved linearity, dynamics and signal-to-noise ratio compared with commercial polycrystalline diamond XBPMs.

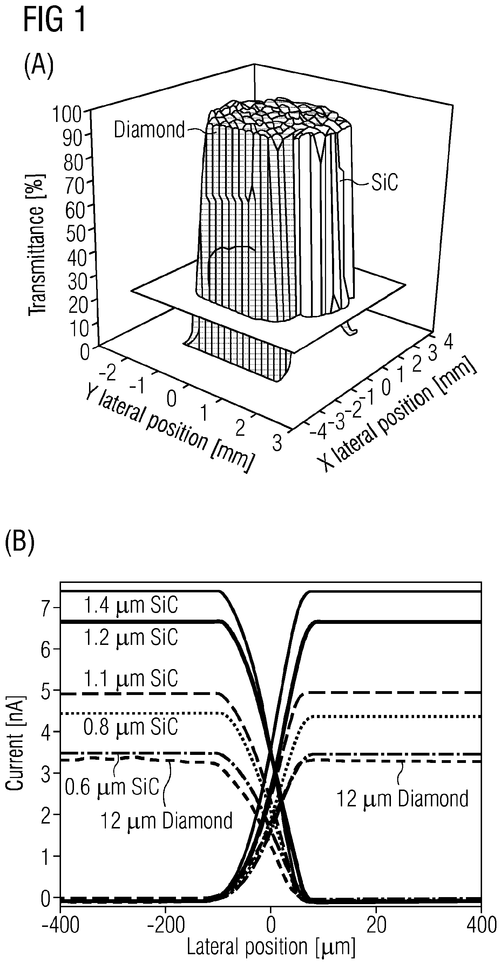

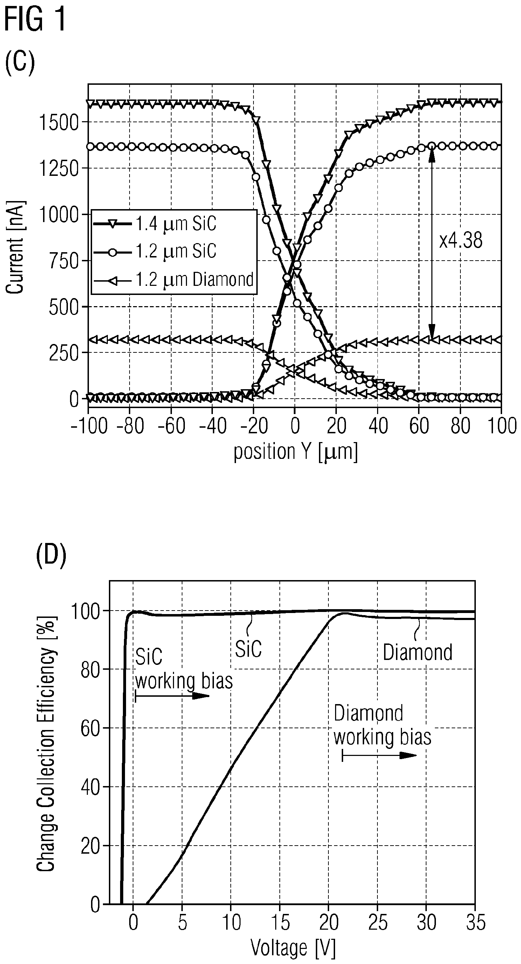

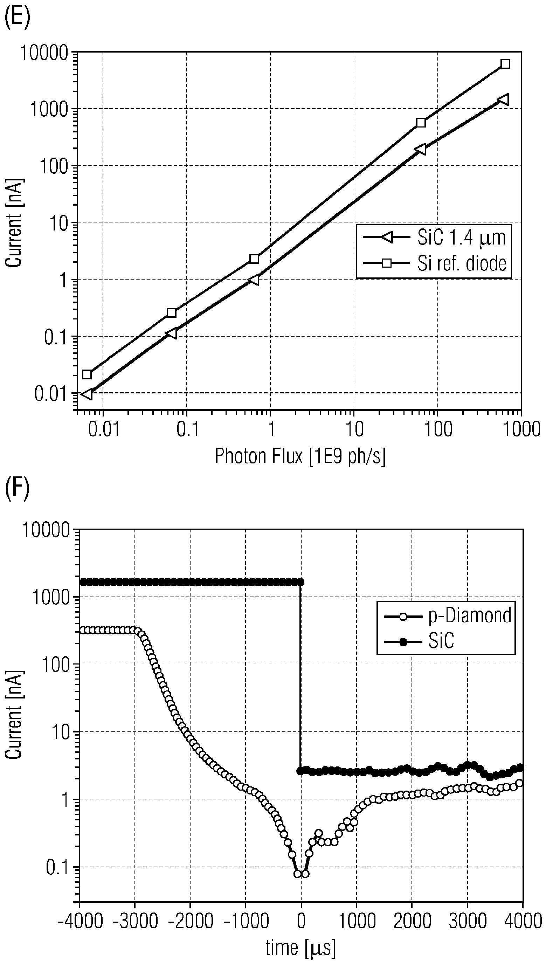

More specifically the first, fully intercepting, SiC XBPM, showed superior characteristics when compared to both polycrystalline and single crystal Diamond ones having:
1. Transparencies equivalent to commercial polycrystalline XBPM devices (RIGI^{®}, from DECTRIS AG, Baden, Switzerland) >98% at 12.4keV, see Fig.1A;
2. Higher (≥x2, depending on the CCE of the devices, thanks to the lower electron-hole energy) and more uniform electrical currents when compared to RIGI^{®} devices, see Fig.1B and 1C;
3. Saturated charge collection efficiency already at zero external bias, Fig.1D, thanks to the internal built-in voltage of the pn diode;
4. Linearity of the electrical response over more than four orders of magnitude, Fig.1E;
5. Electrical response to beam variation faster below micro seconds. More than three orders of magnitude better as compared to polycrystalline devices;
6. Very large device active area, 9×4mm², versus the 7mm² of commercial single crystal XBPM (CIVIDEC); and
7. Possibility of direct observation of the x-ray beam spot using the fluorescence properties of Silicon Carbide, thus simplifying initial beam alignments.

Given the obtained results and availability of electronic grade epitaxies on up to 6-inch wafers, Silicon Carbide will most likely substitute diamond in most beam monitoring applications.

One of the current limits on the applications of this material come from its smaller (×10) x-ray attenuation lengths when compared to Diamond. This difference induces a higher operating temperature of SiC devices when compared to Diamond ones. This limitation becomes important in the case of extremely intense x-ray beams (e.g. synchrotron pink or white beams) as it can rise the operating temperature above the critical temperature for the device which is around 1200°C for a SiC device.

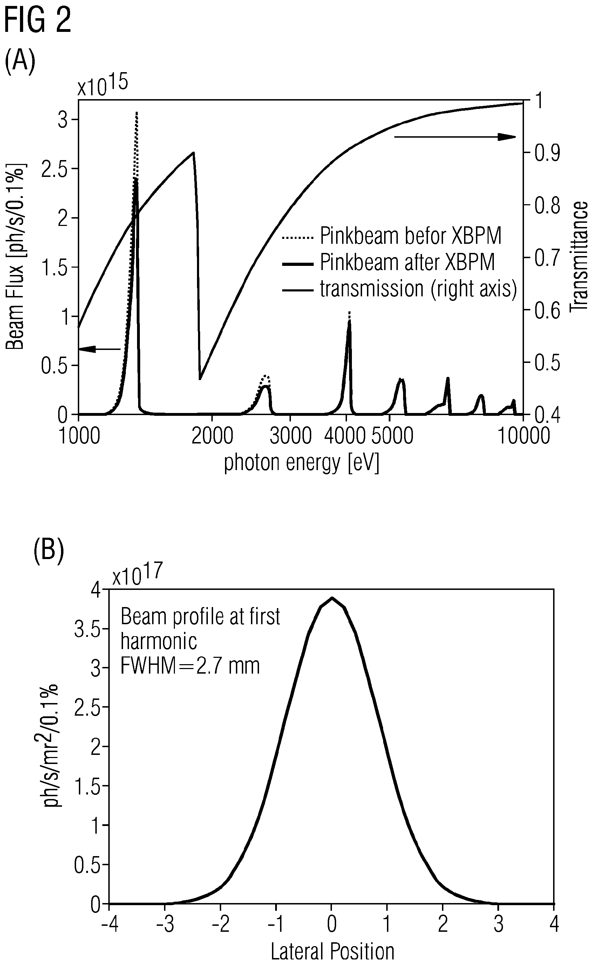

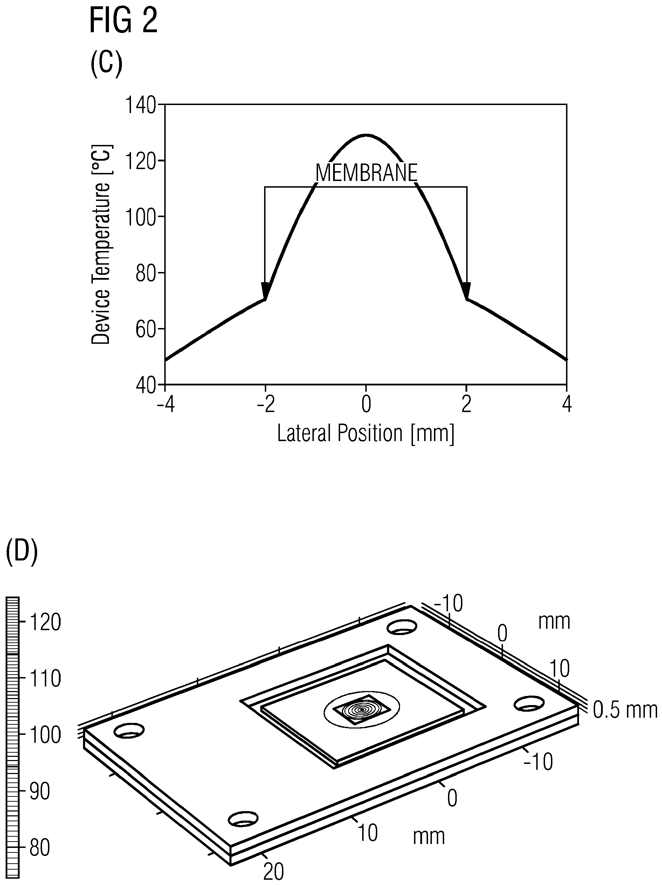

Proper optimization of a SiC detector can result in simulated/predicted reduced operating temperature even in the case of an intense whitebeam, e.g. as obtained from the U19 undulator at the Synchrotron Light Source in Switzerland (SLS), see Fig.2. Fig. 2(A) shows the photon beam distribution as function of the energy (left axis) and transparency for a 1µm SiC XBPM (right). Fig. 2(B) illustrates the lateral, X and Y, profile of the first harmonic; a FWHM of 2.7mm can be extracted. The figures 2(C) and (D) depict the temperature profile of the SiC XBPM below 200°C. A whitebeam profile was considered at a hypothetical position of 28m from a U19 insertion device with 2mm GAP and 3mm² square slits.

But, even with the use of this improved layout, SiC devices will eventually reach critical temperatures for sufficiently intense and focused x-ray beams, e.g. in the case of forth generation, diffraction limited, synchrotron facilities such as SLS2.0. Furthermore, current SiC XBPMs cannot be efficiently used for soft x-ray, since even very thin detectors would result in too high absorptions, e.g. >50% absorption for a 500nm thick SiC XBPM at 700eV.

US 5 717 214 discloses an ionizing radiation sensor using a diamond plate with a hole and metal electrodes on opposites sides thereof. Silicon carbide is used as a substrate for growing or depositing the diamond thereon and is afterwards removed. JP 4 822261 B2 discloses an ionizing radiation beam monitor comprising a Silicon Carbide plate having a plurality of electrodes.

It is therefore the objective of the present invention to provide a device for intercepting and monitoring ionizing beams showing a reduction of heat loads (and thus the operating temperature) and a reduction of the beam interference in semiconductor-based beam monitors under ionizing radiations.

This objective is achieved according to the present invention by an ionizing radiation beam monitor according to claim 1. The radiation beam position monitor comprises a Silicon Carbide plate further having a plurality of electrode pairs, wherein said Silicon Carbide plate comprises at least one hole in the center.

By the provision of these micron or mm-sized openings through the semiconductor monitor, the central part of the beam is fully transmitted without any interference with the Silicon Carbide layer whereas the tails of the beam are partially or totally absorbed to obtain the desired information about the beam characteristics.

In order to increase the spatial resolution of the beam monitor and to decrease the absorption even of the tails of the beam, the Silicon Carbide plate comprises a number of incisions, preferably extending radially from the center towards the outer regions of the Silicon Carbide plate. This measure allows separating the Silicon Carbide plate cross-sectionally into a number of different monitor sections whereas even in the area where the tails of the beam are intercepted the areas where the incisions are located do not contribute to the absorption of the beam. The incisions are chosen to generate free standing sections of the Silicon Carbide plate for areas of the Silicon Carbide plate being irradiated with the radiation beam, preferably by the tails of the beam.

A further preferred embodiment of the present invention can provide for a radiation beam position monitor where the size of the through hole in the center is chosen to allow at least 50% of the radiation beam to pass through this hole in the center. This measure significantly contributes to the reduction of the take-up of the absorption heat by the Silicon Carbide plate.

In a further preferred embodiment, the Silicon Carbide plate comprises a plurality of holes having different diameters and being placed adjacently. The design of SiC XBPMs with different openings allows probing different sections of the beam in a rapid manner. This, together with the calculation of the expected energy distributions, can allow determining a more precise and much faster approximation of the center of mass. Once the center of mass has been reliably identified, other areas of the Silicon Carbide plate allow for a continuous monitoring with minimal beam interference.

In order to provide a radiation beam position monitor having two sets of channels, thus allowing discrimination of the photon energies, the radiation beam position monitor having a layered set-up, said layered set-up having an upper detector based on external photoemission (photoelectric effect, equivalent to that of blade monitors), and a lower detector based on internal photoemission (generation of electron-hole pairs within the semiconductor).

This embodiment allows to integrating the spectral energy distribution (see e.g. Fig.2A) of the x-ray beam over two different separated region: the upper detector will collect the lower photon energies (up to a value determined by the metal thickness) whereas the lower detector will collect only the higher photon energies as the lower ones have been filtered out by the upper detector. In this way it is possible to separate the center of mass of the background dipole radiation (low energy photons) from that of the insertion device.

In a further preferred embodiment of the present invention, said Silicon Carbide plate can be contacted at least partially directly to a copper contact layer. This measure has two important advantages: Firstly, cooling of the sensor will become significantly easier due to the high thermal conductivity of copper and secondly, the SiC plate does not need any bias in order to drive the sensor even at room temperature level.

Preferred embodiments of the present invention are hereinafter described in more detail with respect to the attached drawings which depict in:
- Fig. 1: Overall experimental results for a SiC X-ray beam position monitor;
- Fig. 2: the photon beam distribution as function of the energy (left axis) and transparency for a 1µm SiC XBPM (right) (A); the lateral, X and Y, profile of the first harmonic, a FWHM of 2.7mm can be extracted (B) and the temperature profile of the SiC XBPM below 200°C (C) and (D);
- Fig. 3: different openings on small SiC beam position monitor samples;

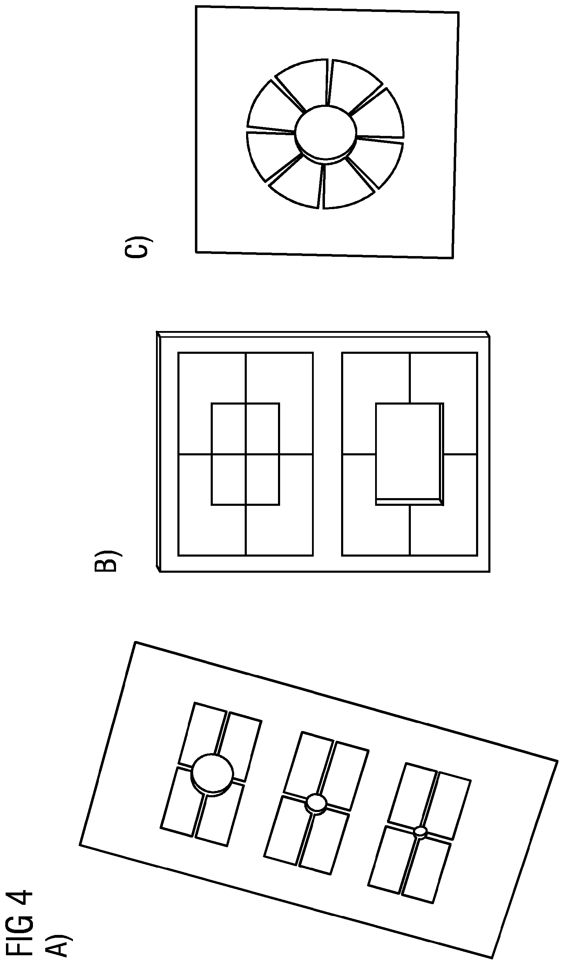

- Fig. 4: different layouts for SiC X-ray beam position monitors, separated regions are associated to different collecting regions, i.e. different channels; (A) Three different beam monitors having different opening sizes, thus collecting different regions of the tail. (B) Two combined sensors, the top is a 4+4 fully absorbing sensor, which allows to precisely measuring the center-of-mass of the beam and correlate it to the outer 4 channels, whereas the lower 4-channel sensor monitors the same tail region of the top while allowing for full transmission of the beam center. (C) Possible 4+4 circular XBPM to identify beam in-plane asymmetries.

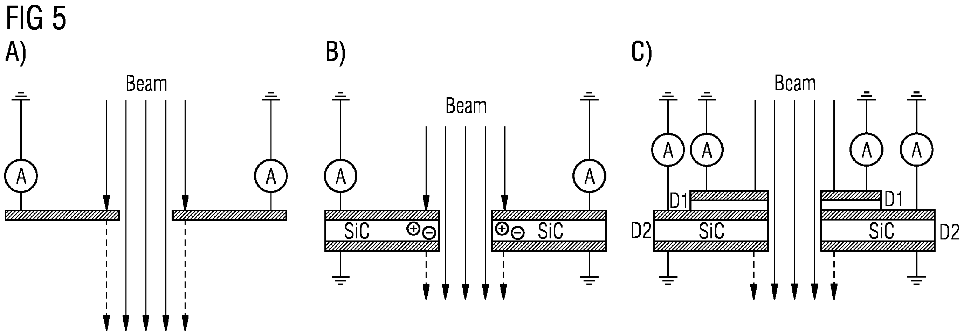

- Fig. 5: schematically a cross-sectional view on a dual blade SiC X-ray beam position monitor. (A) standard blade monitor based on external photoemission of electrons. (B) standard semiconductor based XBPM based on internal photoemission of electrons and holes. (C) New layered XBPM, having an upper detector based on external photoemission, and a lower detector based in internal photoemission. This solution allows having two set of channels, thus allowing discrimination of the photon energies. The separation of detected energy will depend upon the thickness and type (i.e. atomic number and density) and of top metallization which will also act as a filter for the lower semiconductor detector.

The present invention has the objective to provide a device for intercepting and monitoring ionizing beams wherein the device shows a reduction of the heat loads (and thus the operating temperature) and a reduction of the beam interference in semiconductor-based beam monitors under ionizing radiations. The present invention proposes a solution that avoids the interception of the central part of the beam and uses rather only the lateral tails of the ionizing beam to deduce information about the total beam energy distribution at minimal beam interference with the device. This results in a drastic reduction of heat loads and allows for a complete transmittance of the central portion of beam independently of the wavelength, thus allowing continuous monitoring also in the case of soft x-rays.

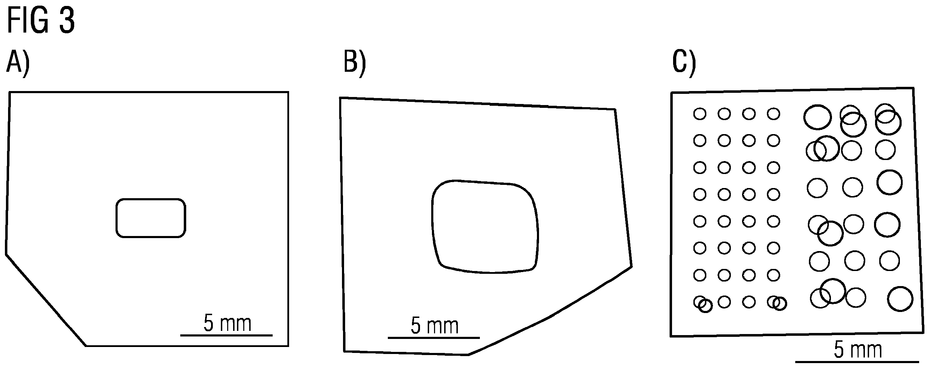

To achieve this goal according to the present invention at least one central opening, preferably being several micrometric sized, is provided in the Silicon Carbide plate. As an alternative, also a number of openings, preferably at micrometric distances, can be provided within the SiC plate detectors. Such small openings have been successfully realized using a newly developed, doping selective anisotropic deep trench wet etching of Silicon Carbide which permits to perform deep etching with high aspect ratios (e.g. >300µm in depth and <1mm in widths). Some examples are shown in Fig. 3.

Using such openings allows profiting from all the properties of Silicon Carbide detectors, while allowing usages in continuous monitoring applications where solid-state detectors are generally not usable. Specifically, the following important benefits are achieved as compared to blade monitors and diamond monitors for white beam monitoring:
a) SiC X-ray beam position monitors (XBPMs) will give higher electrical signals as compared to diamond monitors thanks to their higher quantum efficiency. Further, SiC XBPMs allow a control of the effective doping level over more than 6 orders of magnitude what allows to design more stable monitors based on built-in electric fields, rather than on external biases.
b) SiC XBPM will give much higher electrical signals as compared to blade monitors, more than three orders of magnitude. The reason for that is the quantum efficiency of SiC. For blade monitors, the quantum efficiency is lower than one (one photon may or may not kick out one electron out of the metal) whereas the quantum efficiency is much larger than one for SiC XBPM, e.g. Q_{E}>1500 for 12.4keV photons, which will also result in higher lateral resolutions.
c) The SiC XBPM will allow for absolute measurement of the white beam position. This is because blade monitors suffer from long-term drifts, which prevent this absolute measurement. Such drifts come from the fact that the bias voltage of the blades attracts the residual gas molecules within the vacuum chamber, which results in a contamination of the ceramic spacers. This contamination generates a resistivity shunt that affects the signal strength from each blade (resulting in asymmetry artefacts) and changes the dark current.
d) The SiC XBPM will be less sensitive than blade monitors to low energy photons.
e) The very small footprint of solid-state detectors enables the design of different openings within the same detector, at small and precise distances, thus permitting different compromises between central beam transmission and collection of the beam tails, and quick interchange between the different layouts of the detectors (see Fig.4).
f) Silicon Carbide, when compared to diamond, allows control of the effective doping level over more than 6 orders of magnitude what in turn permit (i) the design more stable monitors based on built-in electric fields, rather than on external biases (ii) efficient cooling of the SiC sensor by direct contact of the device to the copper holder, without the need of insulation layers (which have poor thermal conductivities)

Furthermore, when applied to soft x-ray monitoring, specifically designed openings in SiC XBPM layouts can achieve fast, precise measurements of the beam center of mass during beam alignment and continuous monitoring during measurement. This is because, for soft x-rays, the spatial distribution of the beam energy does not coincide with the measured intensities, so that standard non-energy discriminating detectors, such as blade monitors or fluorescence screens, cannot determine the correct center of mass for a given energy. The current solution for this problem is to use a pinhole and scan through the x-ray beam to measure the intensity after the monochromator and thus obtain a map of the beam for a certain energy. Although this is a very accurate method, it is also very time-consuming. The design of SiC XBPMs with different openings (see Fig.4) or capable of separated determination of low and high photon energies (see Fig.5) would give a reliable and much faster approximation of the center of mass. Once the center of mass has been reliably identified, other areas of the device could allow for a continuous monitoring with minimal beam interference (see Fig.4B).

In Figure 4, some possible layout solutions for the SiC XBPM are presented which allow addressing different measurements issues. The figure shows the different layouts for SiC XBPM with different regions wherein light-grey regions are associated to different collecting regions, i.e. different channels. Figure 4A) illustrates three different SiC X-ray beam monitors having different opening sizes, thus collecting different regions of the tail. Figure 4B) shows two combined sensors. The top is a 4+4 fully absorbing sensor, which allows to precisely measure the center-of-mass of the beam and correlate it to the outer 4 channels, whereas the lower 4-channel sensor monitors the same tail region of the top while allowing for full transmission of the beam center. Figure 4C) illustrates an 4+4 circular XBPM which supports the identification of beam asymmetries.

Another important preferential embodiment is obtained by using a multilayered structure, resulting in two, independent but monolithically fabricated and superimposed, XBPM detectors (see Fig.5). In Figure 5, the upper XBPM signal is generated by the external photoemission of electrons due to the low energy photons (soft x-rays) mainly generated by the Dipole Background Radiation (DBR), whereas the lower XBPM signal is generated by the internal photoemission of electrons (electron-hole generation) and will be mainly due to high energy photons. This solution allows discriminating between different regions of the energy spectrum of white- and pink-beams, permitting the separation of the DBR component. Different type (i.e. atomic number and density) and thickness of the top most metal will result in different energy discrimination.

In detail, Figure 5 schematically illustrates a number of cross-section of different XBPM. Figure 5A on the left shows a standard blade monitor based on external photoemission of electrons. Figure 5B) depicts a standard semiconductor XBPM based on internal photoemission of electrons and holes. Figure 5C) shows a layered XBPM, having an upper detector D1 based on external photoemission, and a lower detector D2 based on internal photoemission. This solution allows having two set of channels, thus allowing discrimination of the photon energies. As a specific example, 1 micron of Tungsten as top most metal would allow D1 to be sensitive to photon energies <2keV (>90% absorbed signal) whereas D2 to be mainly sensitive to photon energies >6keV (>50% transmitted signal from D1).

Further, it has be emphasized that the SiC layer, thanks to the built-in electric field generated by the doping profile, does not need a bias and any electric isolation from a cooled holder. This is very important, because it allows to put the SiC sensor in direct contact to copper which will improve cooling by more than an order of magnitude (copper has >×10 higher thermal conductivity as compared e.g. to Alumina), which is critical when it comes to extremely intense whitebeams. Specifically, the direct contact of the SiC layer to copper is important when considering the reliability of the SiC sensor: in principle, as long as the majority of the beam is passing through the hole, the total absorbed energy is quite low, but when the beam will hit the sensor area (either because one is shifting from one aperture to the other or because of beam instabilities/misalignments) the absorbed power will easily increase above 1kW this will require an extremely efficient cooling, which cannot be easily obtained using insulation layers, e.g. using alumina, separating the sensor from the cooled copper metal.

The SiC XBPM according to the present invention therefore can be used in all relevant X-ray beam measurements. Over diamond sensors used so far, they have the following advantages:
a) Lower costs compared to Diamond (either single or polycrystal);
b) No problems of grain boundaries as compared to polycrystalline diamond;
c) No problems of detector size as compared to single crystal diamond;
d) Possibility to use pn junctions in order to reduce dark current and allow for zero-bias operation; thus simplifying the sensor operation and allowing strong improvement of the cooling power.
e) Possibility of performing precise and multilayered openings in Silicon Carbide using a recently developed doping selective anisotropic deep trench wet etching of Silicon Carbide;
f) Although Silicon Carbide has lower carrier velocities and thermal conductivity as compared to diamond, their values are largely sufficient for quick detector response (<microsecond, sufficient for current feedback systems) and heat dissipation.

A radiation beam position monitor is described, capable of: (a) providing high accuracy for monitoring position of radiation beams; (b) withstanding high-radiation beams for long time, namely, having radiation-resistance and heat resistance; (c) providing quick response; (d) discriminating the background radiation of bending magnets by using monolithically fabricated multilayered sensors; (e) having less radiation beam loss and scattering, namely, having high transmission, and thereby monitoring the beam position while using beam for experiments (on-line monitoring); (f) being easy in maintenance and stably operating in long term; (g) being readily manufactured at low costs,(h) operate at zero bias and in direct contact with cooling system.

## Claims

1. An ionizing radiation beam monitor comprising a Silicon Carbide plate having a plurality of electrodes, **characterized in that**: said Silicon Carbide plate comprises at least one hole in the center and wherein the Silicon Carbide plate comprises a number of incisions, preferably extending radially from the center towards the outer regions of the Silicon Carbide plate, and wherein the incisions are chosen to generate free standing sections of the Silicon Carbide plate for areas of the Silicon Carbide plate being irradiated with the radiation beam.

2. The radiation beam monitor according to claim 1 wherein the size of the through hole in the center is chosen to allow at least 50% of the radiation beam to pass through this hole in the center.

3. The radiation beam monitor according to claim 1 or 2, wherein the Silicon Carbide plate comprises a plurality of holes having different diameters and being placed adjacently.

4. The radiation beam monitor according to any of the preceding claims wherein a layered set-up is provided, said layered set-up having an upper detector (D1) based on external photoemission, and a lower detector (D2) based on internal photoemission.

5. The radiation beam monitor according to any of the preceding claims wherein said Silicon Carbide plate is contacted at least partially directly to a copper contact layer.

## Patentansprüche

1. Monitor für ein ionisierendes Strahlenbündel mit einer Siliziumcarbidplatte, die mehrere Elektroden aufweist, **dadurch gekennzeichnet, dass**:
die Siliziumcarbidplatte mindestens ein Loch in der Mitte und eine Anzahl Einschnitte umfasst, die vorzugsweise von der Mitte aus radial zu den Außenbereichen der Siliziumcarbidplatte hin verlaufen, und die Einschnitte so gewählt sind, dass sie für Bereiche der Siliziumcarbidplatte, die mit dem Strahlenbündel bestrahlt werden, freistehende Abschnitte der Siliziumcarbidplatte bilden.

2. Monitor für ein Strahlenbündel nach Anspruch 1, wobei die Größe des durchgehenden Lochs in der Mitte so gewählt ist, dass mindestens 50% des Strahlenbündels durch dieses Loch in der Mitte hindurchgehen.

3. Monitor für ein Strahlenbündel nach Anspruch 1 oder 2, wobei die Siliziumcarbidplatte mehrere Löcher unterschiedlichen Durchmessers umfasst, die nebeneinander angeordnet sind.

4. Monitor für ein Strahlenbündel nach einem der vorhergehenden Ansprüche, wobei ein Schichtaufbau vorgesehen ist, der einen auf äußerer Photoemission basierenden, oberen Detektor (D1) und einen auf innerer Photoemission basierenden, unteren Detektor (D2) aufweist.

5. Monitor für ein Strahlenbündel nach einem der vorhergehenden Ansprüche, wobei die Siliziumcarbidplatte zumindest teilweise direkt mit einer Kupferkontaktschicht kontaktiert ist.

## Revendications

1. Un moniteur de faisceau de rayonnement ionisant comprenant une plaque de carbure de silicium ayant une pluralité d'électrodes, **caractérisée en ce que** : ladite plaque de carbure de silicium comprend au moins un trou au centre et la plaque de carbure de silicium comprend un certain nombre d'incisions, s'étendant préférablement radialement à partir du centre vers les régions extérieures de la plaque de carbure de silicium, et dans lequel les incisions sont choisies pour générer des sections autonomes de la plaque de carbure de silicium pour les zones de la plaque de carbure de silicium irradiés avec le faisceau de rayonnement.

2. Moniteur de faisceau de rayonnement selon la revendication 1 dans lequel la taille du trou traversant au centre est choisie pour permettre à au moins 50 % du faisceau de rayonnement de passer à travers ce trou au centre.

3. Moniteur de faisceau de rayonnement selon la revendication 1 ou 2, dans lequel la plaque de carbure de silicium comprend une pluralité de trous de diamètres différents et étant placé de manière adjacente.

4. Moniteur de faisceau de rayonnement selon l'une des revendications précédentes dans lequel une configuration en couches est fournie, ladite configuration en couches ayant un détecteur supérieur (D1) basé sur une photoémission externe, et un détecteur inférieur (D2) basé une photoémission interne.

5. Moniteur de faisceau de rayonnement selon l'une des revendications précédentes dans lequel ladite plaque de carbure de silicium est en contact au moins partiellement directement avec une couche de contact en cuivre.
